# EUROPEAN PATENT APPLICATION

(11) **EP 2 239 185 A1**
(43) Date of publication of application: **13.10.2010**
(21) Application number: 09707371.2
(22) Date of filing: 29.01.2009
(51) Int. Cl.: B62D 25/20, B60K 15/067, B60R 22/22

(54) **LOWER-BODY STRUCTURE FOR AUTOMOBILE**

(30) Priority: 08.02.2008 JP 2008028397
(71) Applicant: Toyota Shatai Kabushiki Kaisha, Kariya-shi Aichi-ken 448-8666 (JP)
(72) Inventor: TAGUCHI, Masayuki, Kariya-shi Aichi 448-8666 (JP)
(74) Representative: Albutt, Anthony John
(86) International application number: PCT/JP2009/051452
(87) International publication number: WO 2009/098993

(57) **Abstract**

[TASK] To provide an lower body structure for automobile highly strong against a seat belt load that acts from a seat belt anchor joined to the floor of a cabin compartment rear portion.

[MEANS OF SOLVING THE PROBLEMS] A tank bracket 4 for supporting a fuel tank N is disposed on the underside of the floor 1 of the cabin compartment rear portion, to which the seat belt anchor 3 is joined. The tank bracket 4, having a substantially inverse hat-shape cross section, forms a closed cross section together with the floor 1. At the rear end, a rear edge flange 43 of a side wall 41 is joined to the front face of a floor cross member 2, and a joint flange 44 that extends from the rear end of a bottom wall 40 is joined to the lower face of the floor cross member 2, thereby to enhance the joining force to the floor cross member 4. In the bracket 4, beads 45 and 46 are formed extending in the width direction of the bracket 4, so that the beads 45, 46 deform to spread in the front-rear direction, when the vehicle decelerates abruptly and the seat belt load G acts, and to absorb the load G thereby. As a result, the joint of the seat belt anchor 3 to the floor 1 is not displaced on account of the load G.

## Description

### TECHNICAL FIELD

The invention relates to an lower body structure for automobile for reinforcing the area of the floor of a cabin compartment rear portion floor to which a seat belt anchor is attached.

### BACKGROUND ART

In ordinary passenger vehicles, rear seats are installed on the topside of the floor at the cabin compartment rear portion, such that a seat belt anchor for rear seats is joined to the floor. A tank bracket, which supports a fuel tank, is provided on the underside of the floor, at a position corresponding to the joint position of the seat belt anchor. The tank bracket reinforces the position of the joint between the floor and the seat belt anchor (for instance, Patent document 1).

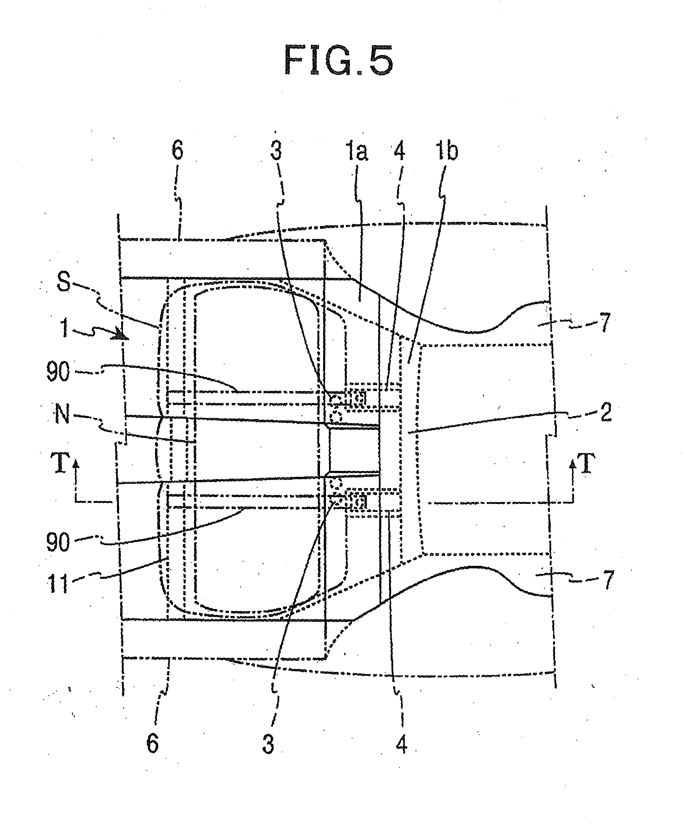

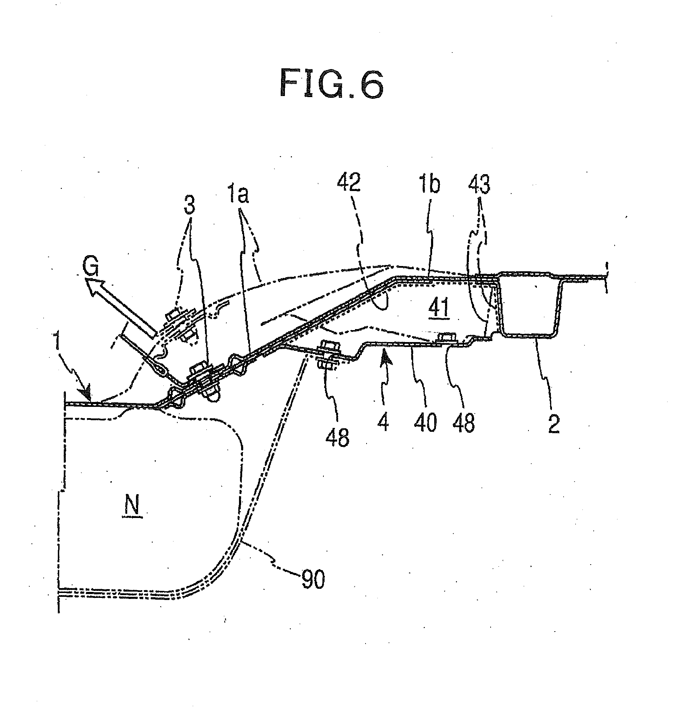

As illustrated in FIG. 5, a three-occupant rear seat S is attached to a floor 1 of a cabin compartment rear portion supported between left and right rockers 6. A fuel tank N is supported on the underside of the floor 1.
As illustrated in FIGS. 5 and 6, the floor 1 has formed thereon, further rearward than the position at which the rear seat S and the fuel tank N are disposed, a front half portion 1a that extends as a inclined surface rearward and obliquely upward, and a flat rear half portion 1b that is continuous to the rear luggage compartment floor and that is higher than the floor 1. Seat belt anchors 3 pass through the gap between the rear edge of the seat cushions and the lower edge of the seat backs of the rear seat S, and are bolted, on the left and right sides in the middle of the vehicle width direction, to the front half portion 1a. There are provided two seat belt anchors 3 on each side, so as to restrain the passengers on the left and right and in the middle of the rear seat. The reference numerals 7, 7 in FIG. 5 denote left and right side members that support, on the left and right, the front and rear half portions 1a, 1b of the floor 1.

Tank brackets 4, 4 are provided on the underside of the floor 1, at the rear of the seat belt anchors 3. The structure of the left and right tank brackets 4, 4 is identical. The tank bracket 4 has an inverse-hat cross-sectional shape that makes up a closed cross-section structure together with the floor 1. The tank bracket 4 includes a bottom wall 40 that extends substantially horizontally in the front-rear direction, and left and right side walls 41, 41. The upper edge of the tank bracket 4 inclines frontward and obliquely downward corresponding to the front half portion 1a, so that the height of the tank bracket 4 decreases toward to the front. In the tank bracket 4, left and right upper edge flanges 42, 42 are overlappingly welded to the underside of the floor 1, while rear edge flanges 43, 43 of both side walls 41 are overlappingly welded to the front face of a rear cross member 2 that extends, in the vehicle width direction, along the underside of the rear half portion 1b of the floor 1.

The tank bracket 4 is provided with screw holes 48, 48 at two positions to the front and rear of the bottom wall 40. The rear end of a belt member 90 that is laid along the front-rear direction of the vehicle, under the fuel tank N that is disposed below the floor 1, so as to suspend the fuel tank N, is supported by being bolted to either of the front or rear screw holes 48. The front end of the belt member 90 is bolted to a floor cross member 11 at the front of the floor 1 of the cabin compartment rear portion.
The purpose of providing the screw holes 48, 48 at two sites in the tank bracket 4 is to use the same tank bracket 4 for different sizes of the fuel tank.
Patent document 1: Japanese Patent Application Publication No. 2001-260946 (JP-A-2001-260946)

### DISCLOSURE OF THE INVENTION

### PROBLEM TO BE SOLVED BY THE INVENTION

Upon sudden vehicle deceleration owing to a front collision or the like, a seat belt load (arrow G in FIG. 6) acts on the seat belt anchor 3 that secures a passenger, and pulls the seat belt anchor 3 obliquely upward. Herein, the passenger-restraining performance of the seat belt must be brought out in such a manner that the seat belt anchor 3 resists the seat belt load G and does not shift forward.
In conventional structures, however, the seat belt load G acts in the direction of separating the joint between the rear end flanges 43 of the tank bracket 4 and the front face of the rear cross member and the joint between the tank bracket 4 and the front half portion 1a of the floor 1. Therefore, the weld joints at the joints of the tank bracket 4 with the floor cross member 2 and with the front half portion 1a of the floor might break if the seat belt load G is substantial (virtual line in FIG. 6). When the weld joints break, the seat belt load G causes the seat belt anchor 3 and the front half portion 1a of the floor to be significantly pulled obliquely upward, as a result of which the passenger-restraining performance of the seat belt fails to be sufficiently brought out.
A further problem is that breakage of the weld joints of the tank bracket 4 impairs also the support of the fuel tank N.
It is thus an object of the invention to realize a highly safe lower body structure for automobile that allows a passenger to be reliably restrained, and a fuel tank to be reliably supported, by preventing displacement of a joint of a floor to a seat belt anchor by way of a tank bracket, such that weld breakage between the tank bracket and the vehicle body does not occur even when a substantial seat belt load acts on the seat belt anchor during a vehicle collision.

### MEANS FOR SOLVING THE PROBLEM

The invention is an lower body structure for automobile in which a rear seat is disposed on a topside of a floor of a cabin compartment rear portion and a seat belt anchor for the rear seat is joined to this topside, and a tank bracket that fixes an end of a belt member, by which a fuel tank disposed below the floor is suspended and supported, is disposed on the underside of the floor, between a joint position of the seat belt anchor and a floor cross member that is provided further rearward than the joint position of the seat belt anchor; wherein the tank bracket has a substantially inverse-hat cross-sectional shape, and forms a closed cross section with the floor; rear end flanges formed at the rear end edge of both side walls of the tank bracket are joined to a front side surface of the floor cross member; a joint flange that extends the rear end of a bottom wall of the tank bracket is joined to the underside of the floor cross member; and the tank bracket has formed thereon a narrow groove-shaped bead extending in the width direction of the tank bracket, the bead deforming so as to spread in the front-rear direction when a seat belt load acts on the tank bracket, via the floor, upon sudden vehicle deceleration (claim 1).
In the tank bracket, in addition to the rear edge flange, the joint flange that extends from the bottom wall is joined to the underside of the floor cross member. The joining force between the floor cross member and the tank bracket against a seat belt load is enhanced thereby. Moreover, the bead deforms so as to spread, whereby the bottom wall side is stretched out when the tank bracket is pulled frontward on account of a substantial seat belt load. The seat belt load is absorbed as a result, and hence the joint to the floor does not break. Accordingly, there is virtually no displacement of the site at which the floor and the seat belt anchor are joined, and thus the passenger is secured, with high restraining force, by the seat belt.

The bead is formed at the rear end and/or at a front-rear intermediate position of the tank bracket (claim 2).
The bead at the rear end of the tank bracket is formed along the boundary between the joint flange and the rear end of the bottom wall of the tank bracket; and a front-rear intermediate bead of the tank bracket is formed so as to extend across the bottom wall of the tank bracket and further along both side walls (claim 3).
The seat belt load is absorbed by the beads, and thus the joints between the tank bracket and the floor cross member and the tank bracket and the floor are secured.

The front half portion of the floor has an inclined surface that extends upward in a direction from a front side to a rear side; a rear half portion continuous to the luggage compartment has a flat surface; the seat belt anchor is joined to the topside of the front half portion, and the floor cross member is disposed on the underside of the rear half portion; the front-rear direction shape of an upper edge of the tank bracket fits the front-rear direction shape of the floor; the front portion of the upper edge inclines downward relative to the bottom wall in a direction from a rear side to a front side; the joint flange is overlappingly fixed to the underside of the cross member; and the front-rear intermediate bead is formed at a position corresponding to a bent portion at the boundary between the front half portion and the rear half portion of the floor (claim 4).
The effect elicited by the invention, namely preventing a seat belt anchor joint of the floor from rising on account of seat belt load can be brought out particularly effectively in floors where the seat belt anchor is joined to an inclined surface.

### BEST MODE FOR CARRYING OUT THE INVENTION

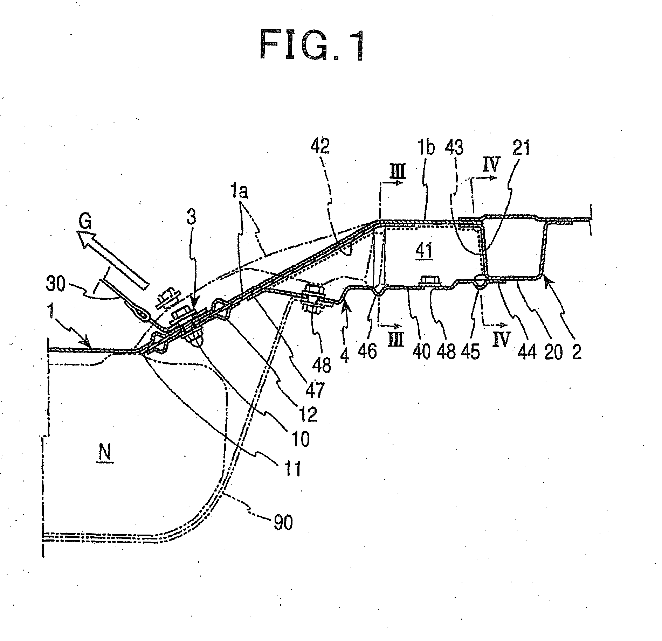

An explanation follows next on an embodiment in which the invention is applied to a floor 1 of a cabin compartment rear portion illustrated in FIG. 5. The basic structure of the floor 1 is the same as a conventional structure. As illustrated in FIG. 1, the floor 1 has formed thereon, further rearward than the position at which a rear seat S (FIG. 5) and a fuel tank N are disposed, a front half portion 1a that extends as a gently inclined surface rearward and obliquely upward, and a level and flat rear half portion 1b, continuous from the front half portion to the rear luggage compartment floor that is higher than the floor 1, being bent between the front half portion 1a and the rear half portion.

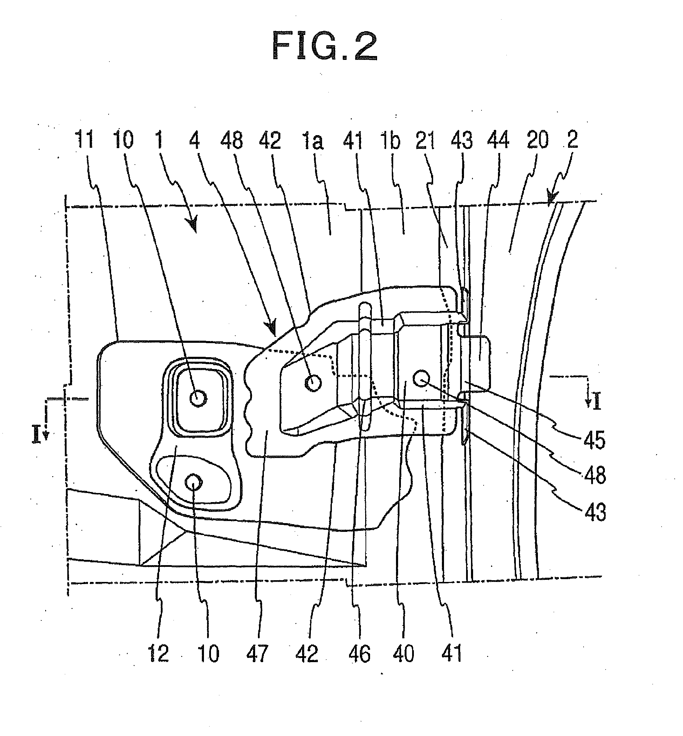

As illustrated in FIGS. 1 and 2, a seat belt anchor 3 for the rear seat is bolted to the front half portion 1a, at a low position close to the front end of the front half portion 1a. The seat belt anchor 3 is a metal plate having a substantially L-shaped cross section. One piece of the seat belt anchor 3 is overlappingly joined to the top face of the front half portion 1a, through bolt fastening via a joint hole 10 of the front half portion 1a. An upstanding another piece of the seat belt anchor 3 is connected to a webbing 30. By way of the webbing 30, the seat belt anchor 3 is connected to a seat belt buckle, not shown. The seat belt buckle passes through the gap between the seat cushion and the seat back of the rear seat and is disposed on the sitting surface side of the seat.

The front half portion 1a has a double panel structure in which a backing plate 11 is overlappingly provided around the joint position of the seat belt anchor 3. The front half portion 1a has a three-panel structure in which a reinforcing plate 12 is further overlaid at the joint of the seat belt anchor 3.

The rear half portion 1b is provided with a floor cross member 2 extending in the vehicle width direction along the underside of the rear half portion 1b. The floor cross member 2 has a substantially inverse-hat cross-sectional shape in which front and rear upper edge flanges of the floor cross member 2 are joined to the underside of the rear half portion 1b, to make up thereby a closed cross-section structure together with the rear half portion 1b.

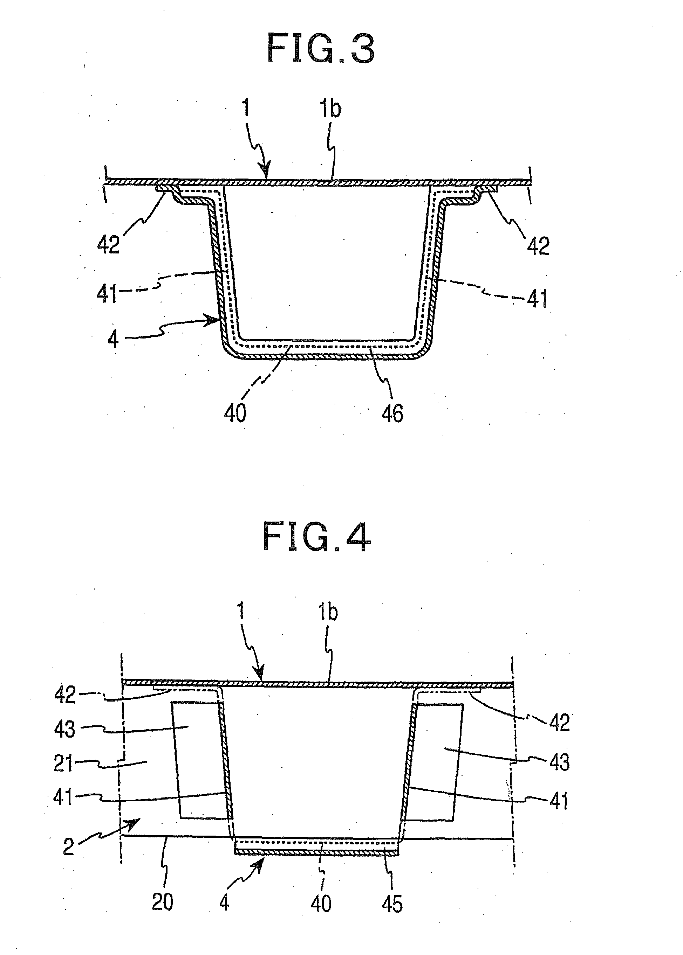

On the floor 1 there is provided a tank bracket 4 for a fuel tank N, positioned over the area from immediately behind a position of the joint of the seat belt anchor 3 to the floor cross member 2, along the undersides of the front half portion 1a and the rear half portion 1b.
The tank bracket 4, which is a press-molded product made up of a metal plate, has an inverse-hat cross-sectional shape that includes a bottom wall 40 and left and right side walls 41, 41 erected on the left and right side edges of the bottom wall 40, as illustrated in FIGS. 1 to 4.

The upper edges of the side walls 41, 41 of the tank bracket 4 are shaped to fit the shape along the front-rear direction of the floor 1, that is made up of the inclined-surface front half portion 1a and the flat-surface rear half portion 1b. The upper edge of the rear half portion of the tank bracket 4 is parallel to the bottom wall 40, while the upper edge of the front half portion inclines gently frontward and downward relative to the bottom wall 40, so that the height of the tank bracket 4 decreases frontward. The upper edges have formed thereon upper edge flanges 42, 42 along the entire length of the upper edges that flare outward, toward the left and right, at substantially right angles.

At the rear end of the tank bracket 4 there are formed rear edge flanges 43, 43 that flare outward, toward the left and right, at substantially right angles, from the rear edges of both side walls 41, 41. A joint flange 44, which flares rearward in such a way so as to extend the bottom wall 40, is formed at the rear end of the tank bracket 4. At the front end of the tank bracket 4 there is formed an oblique joint flange 47 that flares frontward and downward in such a way so as to extend the bottom wall 40.

A bead 45, having a cross section shaped substantially as a narrow U-like groove in the width direction of the bottom wall 40, is formed in the tank bracket 4 along the boundary line between the rear edge of the bottom wall 40 and the joint flange 44. A bead 46, which extends across the bottom wall 40 in the width direction and upward the side walls 41, 41, is formed at an front-rear intermediate portion of the tank bracket 4 at a position corresponding to the bent portion of the boundary between the front half portion 1a and the rear half portion 1b of the floor 1. The cross-sectional shape of the bead 46 is identical to that of the bead 45. The width and depth of the beads 45, 46 are set to range from 3 mm to 5 mm.

The tank bracket 4 is provided with screw holes 48, 48, for bolting the rear end of a belt member 90 that supports a fuel tank N, in a suspending manner, at front and rear positions of the bottom wall 40. Either of the screw holes provided at two sites can be selected in accordance with the size of the suspended fuel tank N.

To mount the tank bracket 4 having the above configuration to the vehicle body, the upper edge flanges 42, 42 are welded to the underside of the floor 1, the rear edge flanges 43, 43 are welded to the side surface 21 at the front of the floor cross member 2, and the joint flange 44 is overlappingly welded to the underside 20 of the floor cross member 2, while the joint flange 47 at the front is welded to the underside of the floor.

The fuel tank N is supported by the belt member 90. The rear end of the belt member 90 is bolted through one of the screw holes 48 (the front hole, in the example of the figure) that are formed in the bottom wall 40 of the tank bracket 4. The front end of the belt member 90 is bolted to a floor cross member 11 (FIG. 5) at a position further toward the front than the inclined surface of the floor 1.

Upon sudden vehicle deceleration owing to a front collision or the like, a seat belt load G (white arrow in FIG. 1) from the seat belt that secures a passenger on the rear seat acts upon the front half portion 1a of the floor 1 and the tank bracket 4 via the seat belt anchor 3, and pulls the front half portion 1a and the tank bracket 4 frontward and obliquely upward. The frontward component of the seat belt load G exerts a force on the tank bracket 4 that would result in breakage in the front-rear direction, at the joint between the floor cross member 2 and the rear edge flanges 43, 43, and at the joint between the upper edge flanges 42, 42 and the front half portion 1a of the floor 1.

In the embodiment, the joint flange 44, which extends horizontally rearward from the bottom wall 40, is provided at the rear end of the tank bracket 4, in addition to the rear edge flanges 43, 43. The joint flange 44 is overlappingly welded to the underside of the floor cross member 2, and hence the frontward component of the seat belt load G acts in the direction of shearing the joint between the joint flange 44 and the underside of the floor cross member 2. The connection between the rear end of the tank bracket 4 and the floor cross member 2 is strengthened thereby.

In addition, the tank bracket 4 has formed thereon a rear-end bead 45 and an intermediate bead 46 that pass transversely across the bottom wall 40 in the width direction. Therefore, the two beads 45, 46 spread in the front-rear direction when subjected to a substantial seat belt load G. The energy of the seat belt load G is absorbed thereby, and thus the seat belt load G can be reduced. This alleviates the burden on the joint between the tank bracket 4 and the floor 1, and prevents the joint from breaking. There may be provided just one of the beads 45, 46, depending on the depth of the bead or the plate thickness of the tank bracket 4. Alternatively, other supplementary beads may further be provided.
Effective sites for formation of the beads 45, 46 is effective include the rear end of the bottom wall 40 and also the position of the floor corresponding to the bent portion, where stress on account of the seat belt load G tends to concentrate.

The lower body structure of the embodiment has thus the effect of reinforcing the joint between the tank bracket 4 and the floor cross member 2, and of alleviating the seat belt load G, by way of the beads 45, 46 of the tank bracket. Accordingly, the lower body structure for automobile prevents effectively breakage of the joint between the tank bracket 4 and the floor cross member 2, and of the joint between the tank bracket 4 and the front half portion 1a of the floor 1. As a result, the joint of the floor 1 with the seat belt anchor 3 can be prevented from moving frontward due to the action of the seat belt load G, so that the restraining performance of the seat belt can be reliably brought out.
Moreover, the joints between the tank bracket 4 and the floor 1 and between the tank bracket 4 and the floor cross member 2 do not break, and thus the fuel tank support performance is secured stably.

In the above embodiment, the explanation of the invention relates to a tank bracket provided on the underside of a floor 1 of a cabin compartment rear portion that has a inclined front half portion 1a and a horizontal rear half portion 1b, but the invention is not limited thereto, and may apply to a tank bracket provided on the underside of a flat floor. In that case, there is used a tank bracket that has a hat-like cross-sectional shape and equal height at the front and the rear, and is provided with a rear edge flange and a joint flange at the rear end. In addition, the tank bracket has a width-direction bead, and the opening at the front end is closed.
Breakage of the joint between the tank bracket and the floor cross member, and breakage of the joint between the tank bracket and the floor, owing to a seat belt load, can be prevented in this case as well, which in turn allows preventing displacement of the seat belt anchor.

### BRIEF DESCRIPTION OF THE DRAWINGS

FIG. 1 is a cross-sectional diagram illustrating a lower body structure of the invention, at a position along line T-T in FIG. 5;
FIG. 2 is a schematic bottom-view diagram of the lower body structure of the invention, viewed from below;
FIG. 3 is a cross-sectional diagram along line III-III of FIG. 1;
FIG. 4 is a cross-sectional diagram along line IV-IV of FIG. 1;
FIG. 5 is a schematic plan-view diagram illustrating a floor of a cabin compartment rear portion; and
FIG. 6 is a cross-sectional diagram illustrating a conventional lower body structure, at a position along line T-T in FIG. 5;

### DESCRIPTION OF THE REFERENCE NUMERALS

1 floor of cabin compartment rear portion
1a front half portion
1b rear half portion
2 floor cross member
20 underside
21 front side surface
3 seat belt anchor
4 tank bracket
40 bottom wall
41 side wall
42 upper edge flange
43 rear edge flange
44 joint flange
45 rear end bead
46 intermediate bead
90 belt member
S rear seat
N fuel tank
G seat belt load

## Claims

1. An lower body structure for automobile in which a rear seat is disposed on a topside of a floor of a cabin compartment rear portion and a seat belt anchor for the rear seat is joined to this topside, and a tank bracket that fixes an end of a belt member, by which a fuel tank disposed below the floor is suspended and supported, is disposed, on the underside of the floor, between a joint position of the seat belt anchor and a floor cross member that is provided further rearward than the joint position of the seat belt anchor;
the lower body structure for automobile being **characterized in that**
the tank bracket has a substantially inverse-hat cross-sectional shape, and forms a closed cross section with the floor; rear end flanges formed at the rear end edge of both side walls of the tank bracket are joined to a front side surface of the floor cross member; a joint flange that extends from the rear end of a bottom wall of the tank bracket is joined to the underside of the floor cross member; and
the tank bracket is formed thereon a narrow groove-shaped bead extending in the width direction of the tank bracket, the bead deforming so as to spread in the front-rear direction when a seat belt load acts on the tank bracket, via the floor, upon sudden vehicle deceleration.

2. The lower body structure for automobile according to claim 1, wherein the bead is formed at the rear end and/or at a front-rear intermediate position of the tank bracket.

3. The lower body structure for automobile according to claim 2, wherein
the bead at the rear end of the tank bracket is formed along the boundary between the joint flange and the rear end of the bottom wall of the tank bracket; and
a front-rear intermediate bead of the tank bracket is formed so as to extend across the bottom wall of the tank bracket and further along both side walls.

4. The lower body structure for automobile according to any of claims 1 to 3, wherein
a front half portion of the floor of the cabin compartment rear portion has a inclined surface that extends upward in a direction from a front side to a rear side, and a rear half portion continuous to a luggage compartment has a flat surface;
the seat belt anchor is joined to the topside of the front half portion, and the floor cross member is disposed on the underside of the rear half portion; and
the front-rear direction shape of an upper edge of the tank bracket fits the front-rear direction shape of the floor, the front portion of the upper edge inclines downward relative to the bottom wall in a direction from a rear side to a front side, the joint flange is overlappingly fixed to the underside of the cross member, and the front-rear intermediate bead is formed at a position corresponding to a bent portion at the boundary between the front half portion and the rear half portion of the floor.
